# EUROPEAN PATENT APPLICATION

(11) **EP 2 963 313 A1**
(43) Date of publication of application: **06.01.2016**
(21) Application number: 15173864.8
(22) Date of filing: 25.06.2015
(51) Int. Cl.: F16H 55/06, F16H 55/12, F16H 55/17

(54) **GEAR MADE FROM FIRST AND SECOND MATERIALS**

(30) Priority: 02.07.2014 US 201462019962 P; 13.03.2015 US 201514657446
(71) Applicant: General Electric Company, Schenectady, NY 12345 (US)
(72) Inventor: ROBERTS, III, Herbert Chidsey, Cincinnati, OH Ohio 45215 (US); TAXACHER, Glenn Curtis, Greenville, SC South Carolina 29615 (US)
(74) Representative: Williams, Andrew Richard

(57) **Abstract**

A gear set may include a gear (10,110,210) having improved operating performance by including location specific strength and wear properties, more specifically the gear may include a hub (12,112,212,300,304) that may be made from a first material and a plurality of gear teeth (14,114,214,310,314) that may be made from a second material and mounted to the hub.

## Description

### BACKGROUND

A gear includes a body having teeth or cogs that may mesh with another toothed part in order to transmit torque. Two or more gears working in tandem may produce a mechanical advantage through a gear ratio. Geared devices can change the speed, torque, and direction of a power source.

### BRIEF DESCRIPTION

In one aspect, the invention relates to a gear including a hub made from a first material and a plurality of gear teeth made from a second material and mounted to the hub and wherein the first material is alternately ductile than the second material.

### BRIEF DESCRIPTION OF THE DRAWINGS

In the drawings:
Figure 1 illustrates a perspective view of a gear having a hub and teeth according to an aspect of the invention.
Figure 2 is a perspective view of a gear having a hub and teeth according to another aspect of the invention.
Figure 3A is a perspective view of a plurality of the teeth of the gear of Figure 2.
Figure 3B is a perspective view of the hub of the gear of Figure 2.
Figure 4A is a perspective view of yet another gear according to an aspect of the invention.
Figure 4B is a cross-sectional view of the gear of Figure 4A.
Figures 5A and 5B illustrate ply patterns that may be used to form the hub of the gears in Figures 1 and 2.
Figures 6A and 6B illustrate ply patterns that may be used to form the gear teeth of the gears in Figures 1 and 2.

### DESCRIPTION OF EMBODIMENTS OF THE INVENTION

Gears, gear trains, and planetary gear systems are common in avionics. For example, in gas turbine engines alone, gears are included in the internal gear train of the accessory gear box, gears are included in the actuation linkage drives for actuation of the nozzles, gears are included in the fan drive planetary gear set, etc. Such gears are often forged from metal that has been heat treated to improve their operating performance by increasing location-specific strength and wear properties. Metal gears are heavy and require high levels of lubrication to maintain sufficient gear life on the metallic tooth contact faces. Larger metal gear sets are difficult to heat treat due to the thermal capacitance of the metallic material, which limits the ability to rapidly cool the material during the manufacturing process to implement the ideal material properties in the tooth and hub regions. Further, heat treating traditional metal gears is very costly. Wear coatings added to metal gear teeth can be used to improve the tooth wear life but will not reduce the gear set weight.

Embodiments of the invention include gears that may be used to produce a gear set that is lightweight and provides the required structural-specific strengths. It will be understood that the above example is just one environment for embodiments of the invention and while weight savings is important in avionics such gears may be utilized in a variety of environments including automotive transmission gear trains, piston engine timing gear drives, wind turbine gear boxes, electrical motor drive trains, etc.

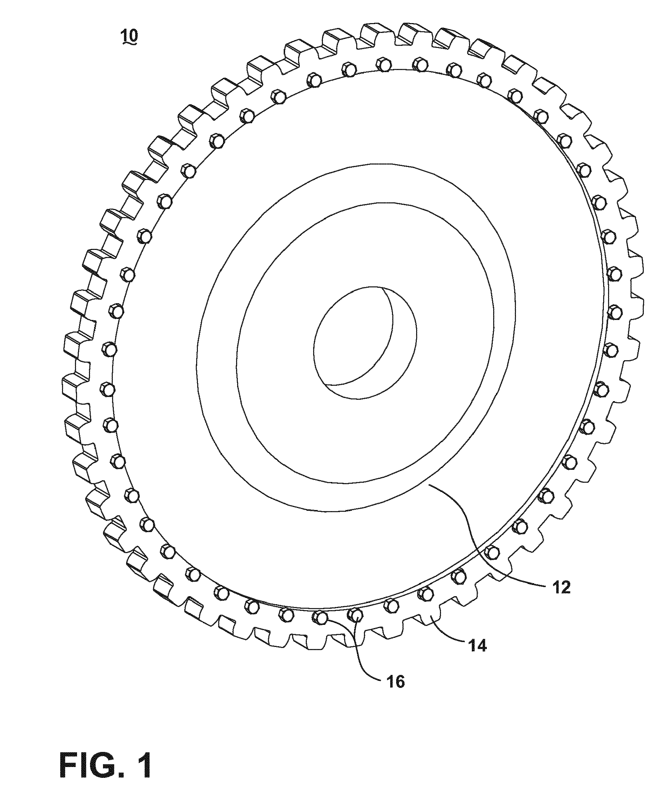

Figure 1 illustrates an exemplary gear 10 according to an embodiment of the invention. The gear 10 includes a hub 12 made from a first material and a plurality of gear teeth 14 made from a second material. The first material of the hub 12 is alternately ductile than the second material of the plurality of gear teeth 14. The plurality of gear teeth 14 may form a gear tooth ring that is mounted to the hub 12. The plurality of gear teeth 14 may be mounted to the hub 12 in any suitable manner. In the illustrated example, the plurality of gear teeth 14 are coupled to the hub 12 with a number of pins 16 that extend through the hub 12 and the plurality of gear teeth 14. The pins 16 may be formed from any suitable material. In this manner, a gear made of multiple materials may be formed to provide the desired structural specific strengths.

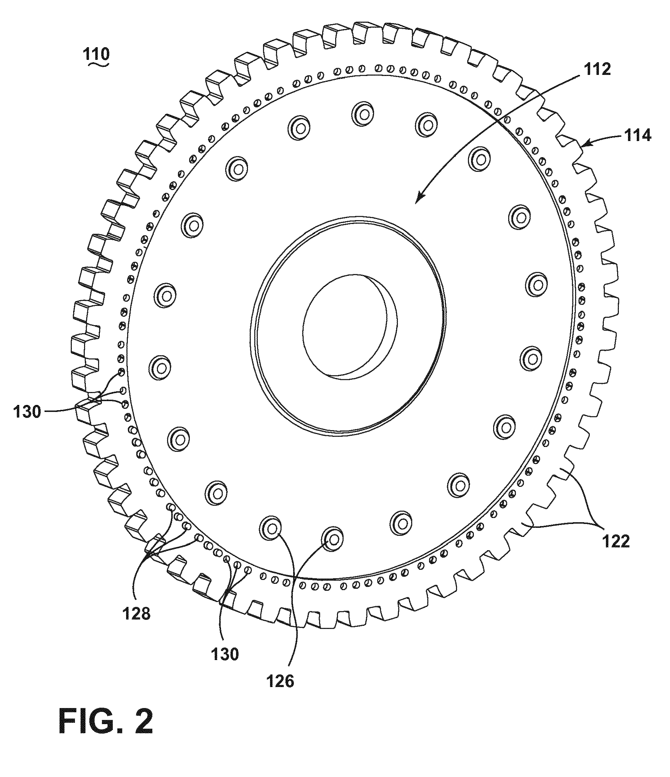

Figure 2 illustrates an alternative exemplary gear 110 according to a second embodiment of the invention. The gear 110 is similar to the gear 10 previously described and therefore, like parts will be identified with like numerals increased by 100, with it being understood that the description of the like parts of the gear 10 applies to the gear 110, unless otherwise noted. It will be understood that the hub 112 is made from a first material and the plurality of gear teeth 114 are made from a second material as in the gear 10.

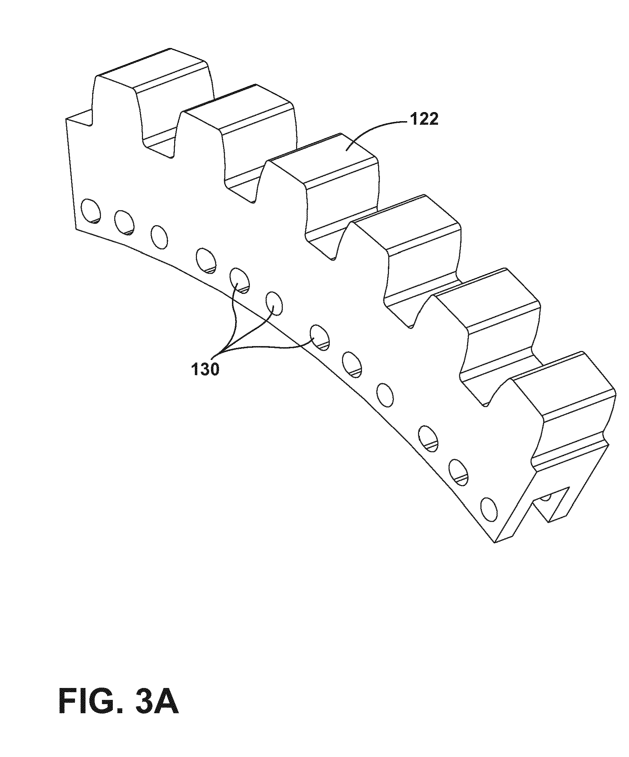

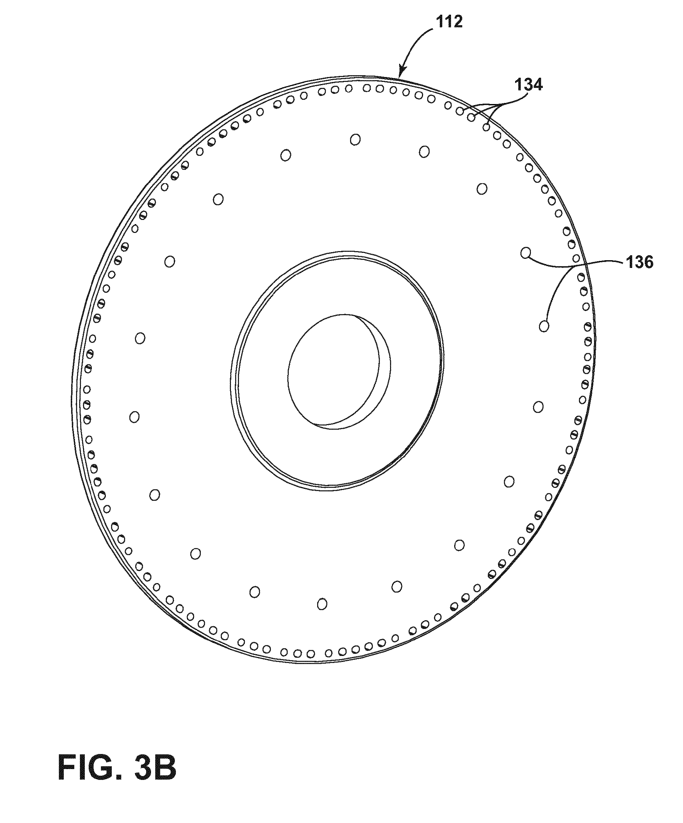

One difference is that the plurality of gear teeth 114 have been illustrated as including discrete sections of gear teeth 122 mounted to the hub 112. The discrete sections of gear teeth 122 may form a gear tooth ring that is mounted to the hub 112. The plurality of gear teeth 114 may be mounted to the hub 112 in any suitable manner. In the illustrated example, the plurality of gear teeth 114 are coupled to the hub 112 with a number of pins 128, which may be formed from any suitable material. Only one of the discrete sections of gear teeth 122 has been shown as being coupled by the pins 128; however, it will be understood that all of the discrete sections of gear teeth 122 may be coupled in this manner. As better illustrated in Figure 3A, the discrete sections of gear teeth 122 include pin holes 130 and as illustrated in Figure 3B the hub 112 comprises corresponding pin holes 134. The hub 112 also includes openings 136. Bolting pucks 126 (Figure 2) may be inserted through the openings 136 and may be used for bolting the hub 112 to a rotor assembly (not shown).

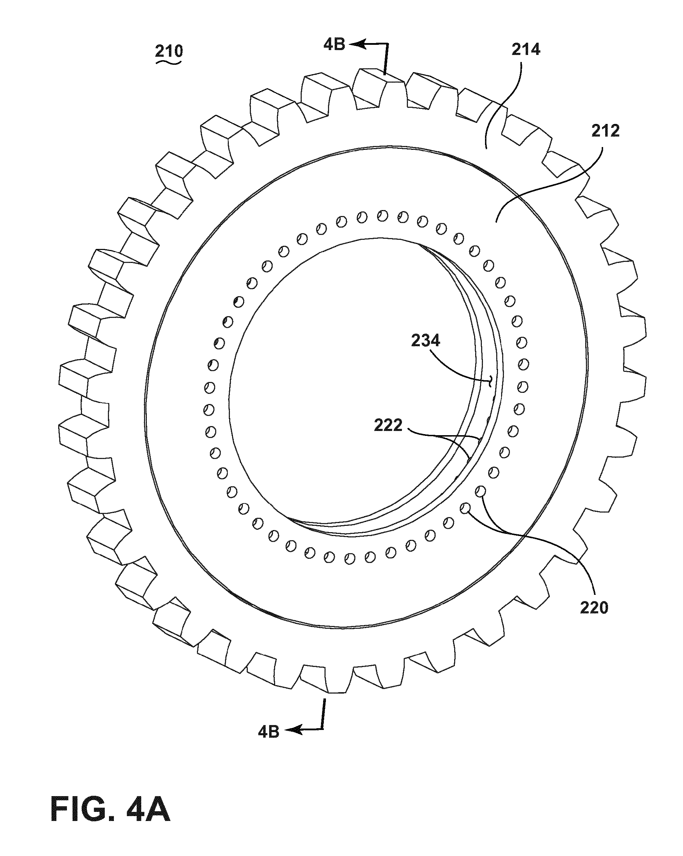

Figure 4A illustrates yet another alternative exemplary gear 210 according to a third embodiment of the invention. The gear 210 is similar to the gear 10 previously described and therefore, like parts will be identified with like numerals increased by 200, with it being understood that the description of the like parts of the gear 10 applies to the gear 210, unless otherwise noted. It will be understood that the hub 212 is made from a first material and the plurality of gear teeth 214 are made from a second material as in the gear 10.

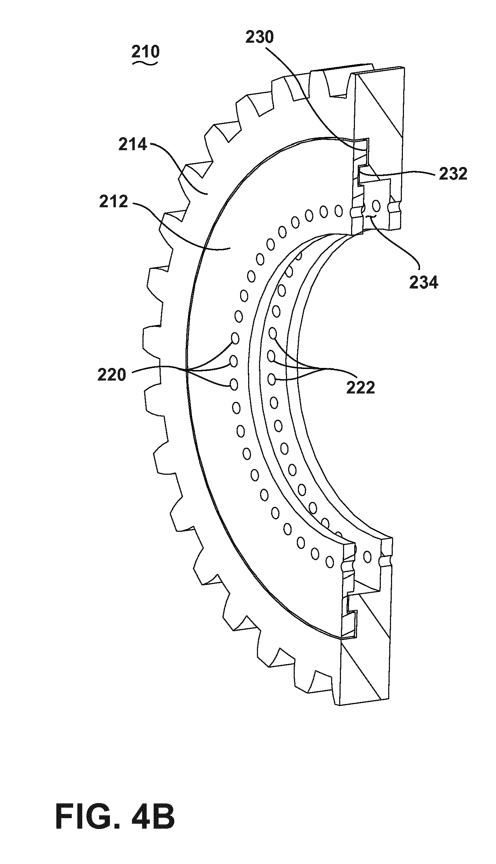

One difference is that the hub 212 and gear teeth 214 are shaped differently from those in the gear 10. More specifically, as more clearly illustrated in Figure 4B, the hub 212 is inset into a portion of the gear teeth 214. As illustrated, the hub 212 may be flush with the gear teeth 214. Further, to facilitate retaining the hub 212 within the gear teeth 214 and/or coupling the gear 210 to a rotor assembly, etc. the hub 212 has been illustrated as including pin holes 220 and the gear teeth has been illustrated as having pin holes 222. In the illustrated example, the hub 212 has also been illustrated as including a recess 230. A protrusion 232 of the gear teeth 214 may be received within the recess 230. This may allow for a space 234 to be created between a portion of the hub 212 and the gear teeth 214.

Regardless of how the portions of the gear are formed including whether the gear teeth are in discrete sections, the alternately ductile first material in the hub 12, 112, 212 may include any suitable material including a metal, a metal matrix composite, a polymer matrix composite, a polymer plastic, etc. Metal matrix composites are materials that use a metal such as aluminum as the matrix and reinforce it with fibers such as by way of non-limiting examples silicon carbide and 6-4 or 6-2-4-2 Ti with SCS-6 silicon carbide monofilament based fibers. Polymer matrix composites also known as fiber reinforced polymers or fiber reinforced plastics use a polymer-based resin as the matrix and a variety of fibers such as by way of non-limiting examples glass, carbon, and aramid as the reinforcement. The harder second material forming the teeth 14, 114, 214 in the gear 10, 110, 210 may include any suitable material including a ceramic matrix composite, a ceramic, a metal, a metal matrix, a polymer matrix composite, a polymer plastic, etc. Ceramic matrix composites use a ceramic as the matrix and are reinforced with short fibers or whiskers such as, by way of non-limiting examples, those made from silicon carbide and boron nitride. Alternatively, the ceramic matrix can be combined with long fiber based reinforcements, which may include for example Hi-Nicalon ceramic fibers that can be incorporated into a large variety of linear tapes or 2D and 3D woven tapes, or braids, etc. The material performances of the gear teeth typically operate within a range of characteristics to limit surface pitting and tooth failure. To resist surface pitting, the surface fatigue limits range between 300 to 800 MPa, to limit wear and surface erosion the surface hardness ranges between 150 to 800 HB, and to limit tooth failures, the bending fatigue limits range between 75 to 1000 MPa, with cyclic load amplitudes ranging between 300 to 2000 MPa.

By way of non-limiting example, the gear 10 or gear 110 may have a hub 12, 112 formed of polymer matrix composite and teeth 14, 114 formed from a ceramic matrix composite. Such a gear having a polymer matrix composite hub 12, 112 may be radial strong and lightweight while the gear teeth 14, 114 formed of a ceramic matrix composite may be both lightweight and have increased durable wear life capability. By way of additional non-limiting example, the gear 10 or gear 110 may have a hub 12, 112 formed from a polymer matrix composite and teeth 14, 114 formed from a metal matrix composite. Such a gear having teeth 14, 114 formed from a metal matrix composite may have increased wear capability and internal structural reinforcement to reduce pitting and cracking when in service. By way of further example, Table 1 shows a variety of materials that may be used along with properties of the formed gear.

**Table 1. Exemplary Materials for Hub and Teeth**

| | | **Tooth material** | | | | | |
|---|---|---|---|---|---|---|---|
| | | Ceramic Matrix Composites (SiC-SiC, SiN-SiN,) | Ceramic (Non-Reinforced) | Conventional Metals: Heat Treated to increase Hardness (Al, SST, Ti, Ni) | Metal Matric Composites: Ti64 with SCS-6 fibers, Ni with Alimina fibers | PMC (Matrix Resins: Epoxy, Polyethylene, etc. and Fibers: S-Glass, Carbon, Kevlar, etc) | Polymer plastics (Non-Fiber Reinforces) |
| **Hub material** | Conventional Metals: Annealed/Heat Treated to Increase Ductility (Al, SST, Ti, Ni) | Low weight, Very high wear, Crack resistant, Supports High Tangential Loads, High Costs, CMC-Corrosion Resistant | Low weight, High wear, Supports High Tangential Loads, | High wear, Supports High Tangential Loads | High wear, Crack resistant, Supports High Tangential Loads, High Costs | Low weight, Crack Attenuation, Self-Lubricating, Self-Healing Material, Supports High Tangential Loads | Low weight, Self-Lubricating, Self-Healing Material, Supports High Tangential Loads |
| | Metal Matric Composites: Ti64 with SCS-6 fibers, Ni with Alimina fibers | Very high wear, Crack resistant, Supports High Tangential Loads, High Costs | High wear, Supports High Tangential Loads, High Costs | High wear, Supports High Tangential Loads, High Costs | High wear, Crack resistant, Supports High Tangential Loads, High Costs | Low weight, Crack Attenuation, Self-Lubricating, Self-Healing Material, Supports High Tangential Loads, High Costs | Low weight, Self-Lubricating, Self-Healing Material, Supports High Tangential Loads, High Costs |
| | PMC (Matrix Resins: Epoxy, Polyethylene, etc. and Fibers: S-Glass, Carbon, Kevlar, etc.) | Low weight, Very high wear, Crack resistant, High Costs | Low weight, Very high wear, High Costs | High wear, Crack resistant | High wear, Crack resistant, High Costs | Low weight Crack Attenuation Self-Lubricating Self-Healing Material, Corrosion Resistant | Low weight Self-Lubricating Self-Healing Material, Corrosion Resistant |
| | Polymer plastics (Non-Fiber Reinforces) | - | - | High wear, Low Tangential Load Capability | High wear, Crack resistant, Low Tangential Load Capability, High Costs | Low weight, Crack Attenuation, Self-Lubricating, Self-Healing Material, Low Tangential Load Capability, Low cost, Corrosion Resistant | Low weight, Self-Lubricating, Self-Healing Material, Low Tangential Load Capability, Low Cost |

In the above table there are several material combinations that may have a material that is self-healing. Self-healing materials are a class of smart materials that have the structurally incorporated ability to repair damage caused by mechanical usage over time. A material that can intrinsically correct damage caused by normal usage could lower costs of a number of different industrial processes through longer part lifetime, reduction of inefficiency over time caused by degradation, as well as prevent costs incurred by material failure. It will be understood that any suitable self-healing materials, which may include mechanisms that lead to the self-healing properties that will lead to arresting cracks, may be used. Such self-healing materials may limit crack initiation and/or propagation.

In Table 1 information has not been included for gears having hubs formed with polymer plastics (non-fiber reinforced) and very hard (ceramic or ceramic matrix) material gear teeth. This is because such gears would be very prone to failing in the hub region due to a high compressive stress in the un-reinforced plastic. The hardness of the ceramic (or CMC) teeth is very strong in compression, yet having very high compression loading on the teeth would translate to a high bearing load in the pin holes within the plastic hub that would exceed the compressive limit of an un-reinforce plastic material, which may lead to a crack.

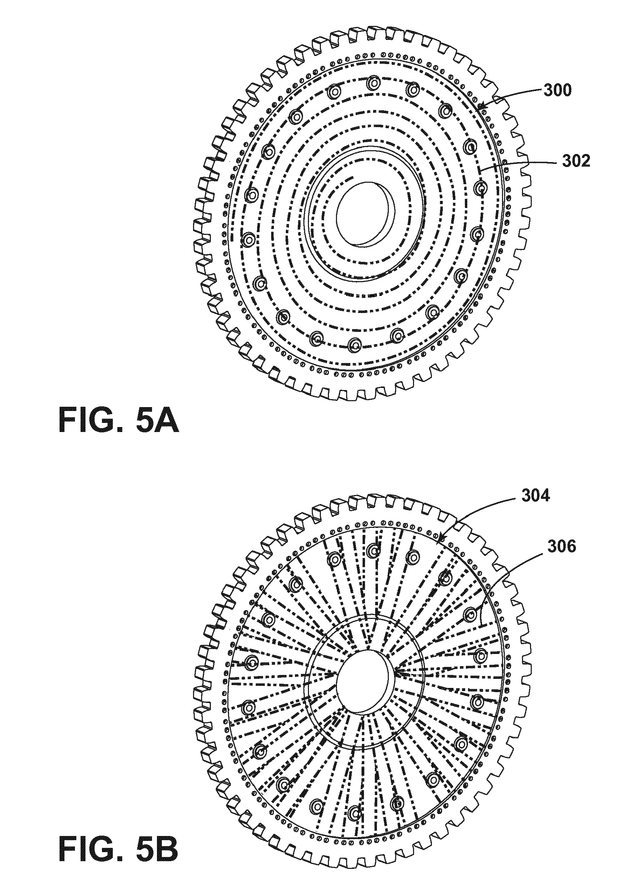

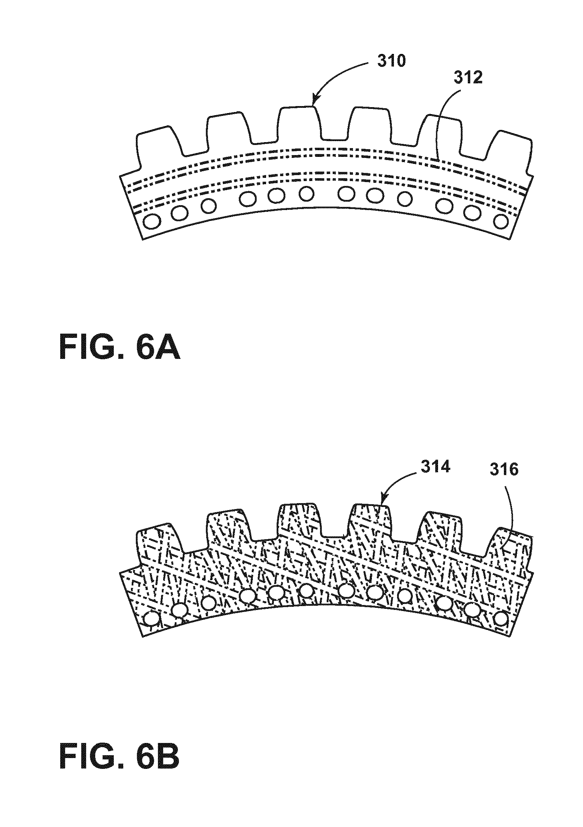

If a composite material is utilized in the gear 10, 110, 210 both the fiber volume and the fiber orientation may be adjusted to minimize fatigue cracks and enhance structural properties. By way of non-limiting examples, in a metal matrix composite the fiber volume may range from 17% to 27%, in a polymer matrix composite the fiber volume may range from 22% to 32%, and in a ceramic matrix composite the fiber volume may range from 65% to 75%. If the hub 12, 112, 212 of the gear 10, 110, 210 is formed from a composite having fibers or plies, the type of ply and the orientation of the plies may be designed to aid in achieving the desired properties. For example, Figure 5A illustrates one exemplary orientation that may be used in a hub 300 of a gear according to an embodiment of the invention. While the hub 300 is illustrated as being shaped like the hub in Figures 1 and 2 it will be understood that the hub may have any suitable shape. More specifically, a hoop-based fiber-winding ply 302 is illustrated. Figure 5B illustrates an alternative hub 304 having radial based fiber ply tapes 306. Furthermore, if the gear teeth are formed from a composite having fibers or plies, the type of ply and the orientation of the plies may be designed to aid in achieving the desired properties including hardness. Figure 6A illustrates an exemplary gear tooth segment 310 having hoop-based fiber ply arcs 312 while Figure 6B illustrates another exemplary gear tooth segment 314 having cross-ply based fiber ply tapes 316. While the gear tooth segments 310 and 314 are illustrated as being shaped like the teeth in Figure 2 it will be understood that the gear teeth and gear tooth ring may have any suitable shape.

The above-described embodiments provide for a variety of benefits including that a gear having specific structural properties may be formed resulting in lower gear weights, better gear tooth wear capability, and lower lubrication volume needed to maintain the gear set operating capability. Such a gear can be used to produce a gear set that is lightweight and durable enough to be put into service in aircraft. For example, a gear having a polymer matrix composite hub and teeth formed from a harder material will be more robust than a full ceramic or ceramic matrix composite based gear design. By way of additional example, a mixed polymer matrix composite and ceramic matrix composite design will be a lighter weight than a metallic gear set and will require less lubricant due to the improved wear capability of the ceramic matrix composite teeth, which will also lower the flight weight of the gear set system. It is contemplated that the gears according to the above-described embodiments may be a third or half of the weight of traditional metal gears.

To the extent not already described, the different features and structures of the various embodiments may be used in combination with each other as desired. That one feature may not be illustrated in all of the embodiments is not meant to be construed that it may not be, but is done for brevity of description. Thus, the various features of the different embodiments may be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A gear (10, 110, 210), comprising:
a hub (12, 112, 212, 300, 304) made from a first material; and
a plurality of gear teeth (14, 114, 214, 310, 314) made from a second material and mounted to the hub (12, 112, 212, 300, 304);
wherein the first material is more ductile than the second material.

2. The gear (10, 110, 210) of claim 1, wherein the first material comprises at least one of a metal, a metal matrix composite, a polymer matrix composite, or a polymer plastic.

3. The gear (10, 110, 210) of either of claim 1 or 2 wherein the second material comprises a ceramic matrix composite, a ceramic, a metal, a metal matrix, a polymer matrix composite, or a polymer plastic.

4. The gear (10, 110, 210) of claim 3, wherein the first material comprises the polymer matrix composite and the second material comprises the ceramic matrix composite.

5. The gear (10, 110, 210) of claim 3, wherein the first material comprises the polymer matrix composite and the second material comprises the metal matrix composite.

6. The gear (110) of any preceding claim, wherein the plurality of gear teeth (114) comprises discrete sections of gear teeth (122) mounted to the hub (112).

7. The gear (10, 110, 210) of any preceding claim, wherein the plurality of gear teeth (14, 114, 214, 310, 314) comprise a gear tooth ring that is mounted to the hub (12, 112, 212, 300, 304).

8. The gear (10, 110, 210) of claim 7, wherein the gear tooth ring and the hub (12, 112, 212, 300, 304) comprise corresponding pin holes (130, 134, 220, 222).

9. The gear (10, 110, 210) of either of claim 7 or 8, wherein the hub (12, 112, 212, 300, 304) comprises bolting pucks (126) for bolting the hub (12, 112, 212, 300, 304) to a rotor assembly.

10. The gear (10, 110, 210) of any of claims 7 to 9, wherein the second material comprises hoop-based fiber ply arcs (312) or cross-ply based fiber ply tapes (316).

11. The gear (10, 110, 210) of any preceding claim, wherein the first material comprises a hoop-based fiber-winding ply (302) or radial based fiber ply tapes (306).
